# EUROPÄISCHE PATENTSCHRIFT

(11) **EP 3 684 847 B1**
(45) Veröffentlichungstag und Bekanntmachung des Hinweises auf die Patenterteilung: **05.08.2026**
(21) Anmeldenummer: 18773349.8
(22) Anmeldetag: 05.09.2018
(51) Int. Cl.: C08G 73/20

(54) **VERFAHREN ZUR HERSTELLUNG VON POLYBENZIMIDAZOLEN**
PROCESS FOR PREPARING POLYBENZIMIDAZOLES
PROCÉDÉ DE PRÉPARATION DE POLYBENZIMIDAZOLES

(30) Priorität: 20.09.2017 AT 3732017
(43) Veröffentlichungstag der Anmeldung: 29.07.2020
(73) Patentinhaber: Technische Universität Wien, 1040 Wien (AT)
(72) Erfinder: UNTERLASS, Miriam Margarethe, 1070 Wien (AT); TAUBLAENDER, Michael J., 7203 Wiesen (AT); THIELE, Sophia, 1050 Wien (AT)
(74) Vertreter: Ellmeyer, Wolfgang
(86) Internationale Anmeldenummer: PCT/EP2018/073891
(87) Internationale Veröffentlichungsnummer: WO 2019/057497

(56) Entgegenhaltungen:
- EP-A1- 0 559 392
- WO-A1-2016/179625
- US-A- 3 518 232
- US-A- 3 923 953
- US-A- 3 969 325
- US-A- 4 005 058
- MICHAEL TAUBLÄNDER: "Development of Novel Synthetic Routes Towards Polyimides and Poly(perinone)s; online abstract", 28 February 2017 (2017-02-28), Vienna, XP055534660, Retrieved from the Internet <URL:http://katalog.ub.tuwien.ac.at/AC13442906> [retrieved on 20181214]

## Beschreibung

Die vorliegende Erfindung betrifft ein neues Verfahren zur Herstellung von Polybenzimidazolen.

### STAND DER TECHNIK

Aromatische Polybenzimidazole, d.h. Polymere, in denen zwei Benzimidazol-Einheiten über einen aromatischen Linker verbunden sind und so ein durchkonjugiertes System bilden, stellen aufgrund ihrer besonderen Eigenschaften (hoher Schmelzpunkt, Härte, Druckbeständigkeit. Lichtabsorptionsvermögen) wertvolle Hochleistungspolymere, beispielsweise zur Verwendung auf dem Brandschutzsektor, für Hochtemperaturmembranen in Polymerelektrolytbrennstoffzellen oder in der Photovoltaik dar. Ihre Synthese erfolgt in der Regel durch Polykondensation von aromatischen Tetraaminen, genauer gesagt Bis(o-diaminen), mit aromatischen Di- oder höherwertigen Carbonsäuren - oder deren Estern, Anhydriden oder Aldehyden - unter Erhitzen der Reaktanten auf Temperaturen von weit über hundert Grad (bei Verwendung hochsiedender Lösungsmittel) bis hin zu mehreren hundert Grad Celsius (im festen Zustand). Dabei werden - bei Verwendung zweiwertiger Carbonsäuren oder Aldehyde Polymere erhalten, in denen der Rest X des jeweiligen Carbonsäure- oder Aldehyd-Moleküls eine Verbindung zwischen je zwei Imidazol-Ringen der Polybenzimidazole bildet, wie nachstehend dargestellt.

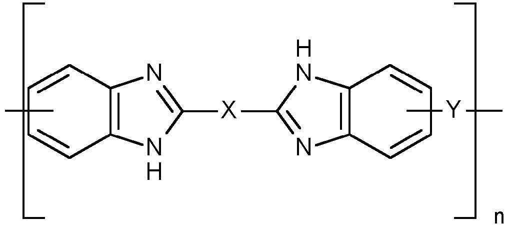

Die Benzolringe der Polybenzimidazole sind dabei - je nach Wahl des Tetraamins - über einen (vorzugsweise aromatischen) Linker Y verbunden, der jedoch auch eine direkte chemische Bindung sein kann, wie sie z.B. bei Verwendung von Tetraaminobiphenyl (Diaminobenzidin, DAB) als Tetraamin entsteht. Ein Spezialfall ist bei Verwendung von Tetraaminobenzol gegeben, da hier die beiden Imidazolringe an denselben Benzolring gebunden sind, wie dies nachstehend gezeigt wird.

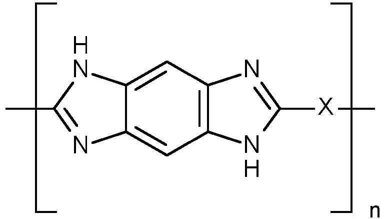

Die Synthese solcher Polymere unter Verwendung aromatischer Dialdehyde wird vor allem in einem umfassenden Review von Eberhard Neuse (Adv. Polym. Sci. 47, 1-42 (1982) sowie speziell für Diaminobenzidin als Tetraamin einem weiteren Artikel dieses Autors (Neuse und Loonat, Macromolecules 16(1), 128-136 (1983)) ausführlich beschrieben. Demzufolge kommt es bereits beim Vermischen von Tetraamin und Dialdehyd zur Bildung eines Polymers, das als Schiffsche Base beschrieben wird, wie sie nachstehend für den Fall der Reaktion von Terephthalsäuredialdyhyd und Diaminobenzidin dargestellt ist: 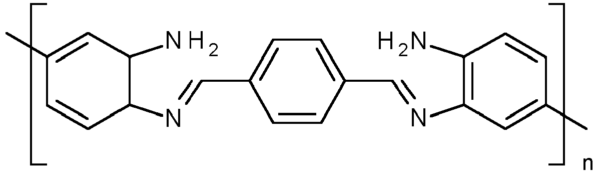 die in der Folge zum Polybenzimidazol zyklisiert wird. In beiden Artikeln wird ausdrücklich auf die Notwendigkeit des Ausschlusses von Sauerstoff beim Vermischen der Reaktanten sowie der Gegenwart desselben im nachfolgenden Zyklisierungsschritt hingewiesen. Im ersten Polykondensationsschritt soll es ansonsten, d.h. in Gegenwart von O₂, zu unerwünschten Oxidationsreaktionen kommen, während die Zyklisierung in Abwesenheit von O₂ als "höchst ineffizient", weil nur sehr langsam vonstatten gehend, offenbart wird.

Literatur zur Synthese monomerer Benzimidazole findet sich natürlich weitaus häufiger, darunter auch in den letzten Jahren immer beliebter werdende Hydrothermalsynthesen, d.h. Reaktionen in Wasser als einzigem oder zumindest Hauptlösungsmittel bei Temperaturen über 100 °C, da hierbei keine mitunter stark toxischen Lösungsmittel zu entsorgen sind. Siehe beispielsweise Dudd et al., Green Chem. 5, 187-192 (2003), für die Synthese von 2-Phenylbenzimidazol aus Diaminobenzol und Benzoesäure in Wasser mit Temperaturen bis zu 400 °C, wobei allerdings unter 350 °C keine Ausbeuten über 50 % erzielbar waren und erst nach 14 Stunden eine Ausbeute über 90 % festgestellt werden konnte, sowie Nagao et al., Green Chem. 18, 3494-3498 (2016), für die Synthese von 1,2-Diphenylbenzimidazol aus 2-Aminodiphenylamin und Benzoesäureanhydrid bei Temperaturen zwischen 400 und 445 °C.

Bei Verwendung vierwertiger Carboxyl- oder Carbonylverbindungen, z.B. von Tetracarbonsäuren oder deren Anhydriden, kommt es allerdings neben dem Ringschluss des Imidazolrings zu einem weiteren Zyklisierungsschritt. Bei Verwendung von Benzoltetracarbonsäure mit Tetraaminodiphenylether, wie dies von von Bell und Pezdirtz, J. Polym. Sci. Pol. Lett. 3(12), 977-984 (1965), offenbart wird, erfolgt beispielsweise zunächst als erste Polykondensation eine Amidierung unter Reaktion jeweils einer Amino- mit einer Carbonsäure-Funktionalität, wobei ein so genanntes Poly(amino-säureamid), im Englischen "poly(amino-acid-amide)" oder "Poly(A-A-A)" gennant, entsteht. Danach sollen im zweiten Kondensationsschritt die ersten Ringschlüsse folgen: sei es durch Angriff der freien Amino-Funktionalitäten an den zuvor amidierten Carboxyl-Kohlenstoffen unter gleichzeitiger Wasserabspaltung zur Ausbildung von an die Benzolringe des Tetraamins anellierten Imidazolen unter Beibehaltung der freien Carboxylgruppen, oder aber durch Angriff der Amid-Stickstoffe an den freien Carboxyl-Kohlenstoffen unter Wasserabspaltung zur Ausbildung zweier Imid-Gruppierungen am Aromaten der Tetracarbonsäure unter Beibehaltung der freien Aminogruppen. Als dritter und letzter Kondensationsschritt erfolgen nun die Ringschlüsse unter Ausbildung der zweiten 5-gliedrigen Ringe, wie dies nachstehend dargestellt ist. Streng genommen entsteht freilich aus dem rechts dargestellten Zwischenprodukt mit freien Aminogruppen ein anderes, nämlich das um eine horizontale Achse gespiegelte Kondensationsprodukt, da im Polymer keine freie Drehbarkeit der Einheiten gegeben ist. Dies wird auch von Bell und Pezdirtz angemerkt ("designation of the positions is arbitrary").

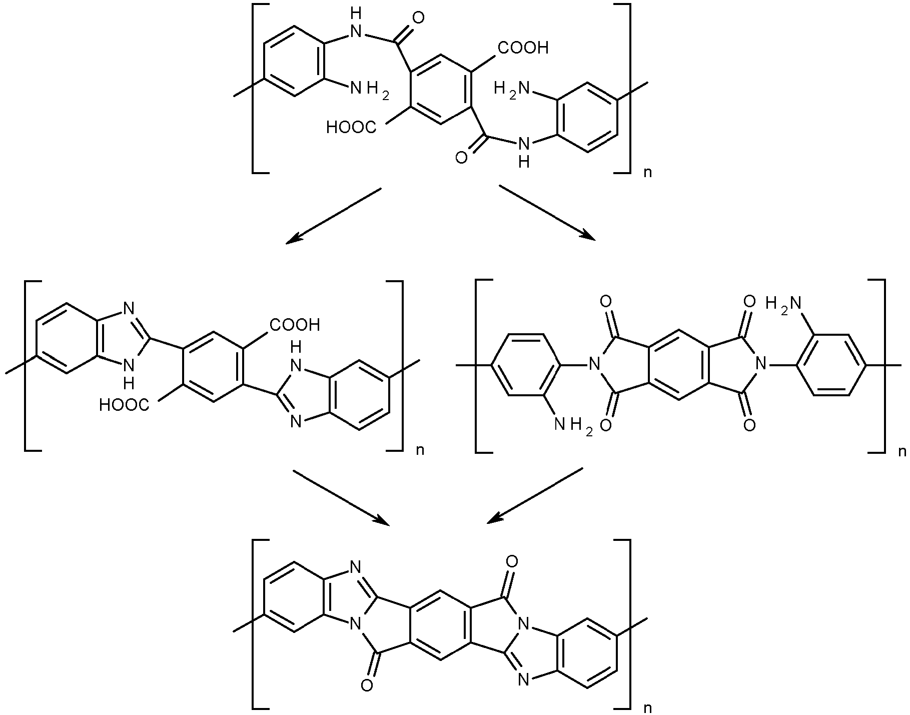

Gemäß Bell und Pezdirtz werden die polymeren A-A-A-Zwischenprodukte isoliert und als Lösung zur Beschichtung von Oberflächen eingesetzt, wonach erst durch Erhitzen auf 325 °C die vollständig kondensierten Polybenzimidazole entstehen.

Diese Polybenzimidazole werden in der Literatur unter anderem auch als Polyimidazopyrrolone oder kurz Polypyrrone bezeichnet. Siehe beispielsweise Dawans und Marvel, J. Polym. Sci., Part A: Polym. Chem. 3, 3549-3571 (1065), Bell und Jewell, J. Polym. Sci., Part A: Polym. Chem. 5, 3043-3060 (1967), und Johnston und Epps, J. Polym. Sci., Part A: Polym. Chem. 10, 2751-2765 (1972), wo durchwegs Synthesen ausgehend von Pyromellitsäuredianhydrid, entweder in fester Form bei Temperaturen zwischen 200 und 300 °C oder als Lösung in aprotischen, hoch siedenden Lösungsmitteln (z.B. Dimethylacetamid, DMAc), offenbart werden.

Interessanterweise offenbarte V. L. Bell, der 1965 zusammen mit G. F. Pezdirtz noch beide oben dargestellten Varianten für die Bildung von Zwischenprodukten aus dem anfänglichen Polykondensat "Poly(A-A-A)" für möglich erachtet hatte, zwei jahre später in Bell und Jewell (1967, s.o.) nur noch das rechte, freie Aminogruppen und zyklische Imide, aber keine freien Carbonsäuregruppen umfassende Zwischenprodukt.

Bei Verwendung von Naphthalintetracarbonsäure anstelle von Pyromellitsäure werden entsprechende Polybenzimidazole mit einem gesättigten 6-gliedrigen Ring erhalten. Aufgrund der Strukturidentität mit dem organischen Pigment und Halbleiter Perinon wurden diese in der jüngeren Vergangenheit auch als "Polyperinone" bezeichnet. Bezüglich der Synthese siehe beispielsweise Van Deusen, J. Polym. Sci. Pol. Lett. 4, 211-214 (1966), und Zhou und Lu, J. Appl. Polym. Sci. 58, 1561-1565 (1995). Letztere Literatur offenbart ebenfalls eine Reaktionsführung in Lösung in DMAc, wobei allerdings zunächst nur das nicht ringgeschlossene Zwischenprodukt hergestellt und isoliert wurde und nach anschließendem Folienziehen einer DMAc-Lösung davon durch Erhitzen auf 300 °C ringgeschlossen wurde. Auch andere Autoren beschreiben die Ausfällung und Isolierung des Zwischenprodukts, oder aber die Filtration oder Zentrifugation der Lösung desselben vor dem späteren Ringschluss. Van Deusen (s.o.) offenbart hingegen die direkte Polykondensation zum vollständig ringgeschlossenen Polyperinon in Polyphosphorsäure bei Temperaturen von bis zu 220 °C, worauf eine mitunter aufwändige Reinigung der Polymere erfolgen muss.

Morgan und Scott, J. Appl. Polym. Sci. 16, 2029-2050 (1972), offenbaren die Herstellung von stöchiometrischen Gemischen sowie Salzen aus der Tetracarbonsäure und dem Tetraamin unter Verwendung von N₂ als Schutzgas gegen Sauerstoffzutritt und die anschließende Polykondensation der Gemische bzw. Salze unter gleichzeitigem Formen des dabei erhaltenen Polymers durch Heißpressen unter Erhitzen auf Temperaturen von 450 °C. Dabei werden allerdings Produkte mit stark schwankender Qualität und Stabilität erhalten, wobei unter Stickstoff durchwegs einer höhere Stabilität als in Luft festgestellt wurde.

Allen diesen Polybenzimidazolen mit anelliertem 5- oder 6-gliedrigem Ring ist gemein, dass bezüglich der freien Carboxyl- bzw. Aminogruppen der Zwischenprodukte und somit auch der Carbonylgruppen der vollständig kondensierten Polymere cis- und trans-Isomerien vorliegen, wie dies Bell und Pezdirtz (s.o.) sowie Van Deusen (s.o.) andeuten und die Erfinder des vorliegenden Anmeldungsgegenstandes bestätigt haben, worauf später noch näher eingegangen wird.

Die Arbeitsgruppe der Erfinder hat bereits in der Vergangenheit umfangreiche Forschungen bezüglich Hydrothermalsynthesen zur Herstellung von Polyimiden angestellt; siehe z.B. PCT/AT2016/050140 sowie PCT/AT2017/000058. Konkret in Bezug auf die oben erwähnten Polybenzimidazole mit anelliertem 6-gliedrigen Ring ("Polyperinone") wurden ebenfalls bereits Forschungen angestellt; siehe z.B. Michael Taubländer, "Development of Novel Synthetic Routes Towards Polyimides and Poly(perinone)s", Diplomarbeit, Technische Universität Wien, 2017. Im Zuge dessen wurde herausgefunden, dass mittels Hydrothermalsynthese ausgehend von Naphthalintetracarbonsäuredianhydrid (NTCADA) und Diaminobenzidin (DAB) zwar prinzipiell auch die obigen 6-gliedrigen Polyperinone herstellbar sind. Allerdings wiesen die Produkte sehr niedrige Molekulargewichte auf (was mittels IR-Analyse ermittelt wurde), und die wässrigen Phasen waren stark verunreinigt und dunkelviolett gefärbt. Dies wurde auf einen erheblichen Anteil an oxidativer Polymerisation unter Bildung verschiedenster Nebenprodukte zurückgeführt, aufgrund derer die Stöchiometrie gestört wurde, weswegen kein hohes Molekulargewicht des gewünschten Polyperinons erzielbar war. Diese Nebenprodukte waren darüber hinaus kaum vom Zielpolymer zu trennen, da bei der Extraktion sowohl wässrige als auch ethanolische Waschlösungen selbst nach sehr vielen Durchgängen auch weiterhin stark gefärbt waren.

Ziel der vorliegenden Erfindung war vor diesem Hintergrund, ein verbessertes Verfahren zur Herstellung von Polybenzimidazolen, insbesondere der obigen Polybenzimidazole mit anelliertem 5- oder 6-gliedrigem Ring, zu entwickeln, durch das hochmolekulare Polymere auf relativ einfache Weise und ohne die Bildung großer Mengen an schwer abtrennbaren Nebenprodukten erhältlich sind.

### OFFENBARUNG DER ERFINDUNG

Dieses Ziel erreicht die vorliegende Erfindung durch Bereitstellung eines Verfahrens zur Herstellung von Polybenzimidazolen der nachstehenden Formel (1) oder (2), worin n und m jeweils ≥ 1 sind: 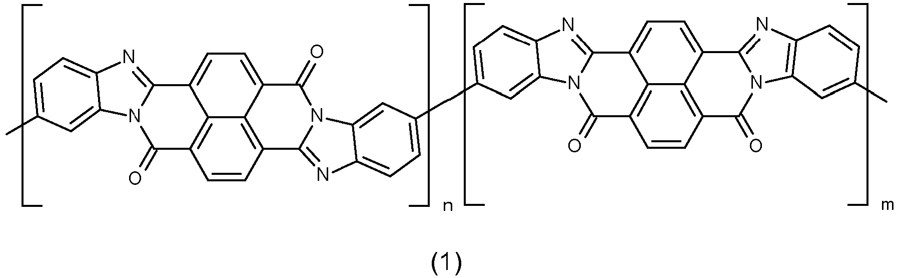 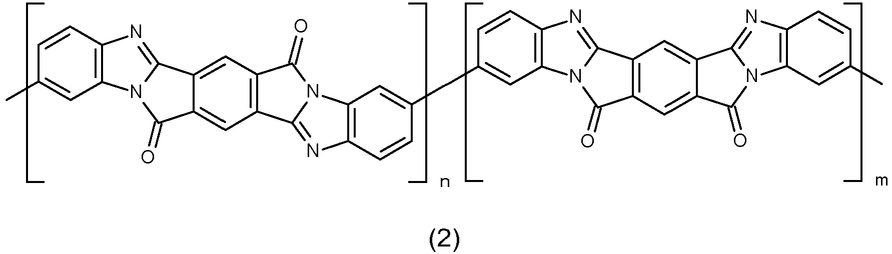
mittels Polykondensation entsprechender Tetracarbonsäuren oder Dianhydride und Tetraamine durch gemeinsames Erhitzen der Reaktanten, das dadurch gekennzeichnet ist, dass
die Herstellung der Polybenzimidazole der Formel (1) oder (2) ausgehend von den Tetracarbonsäuren und im Wesentlichen ohne jegliche Bildung von Nebenprodukten erfolgt, indem
   a) zunächst ein stöchiometrisches Salz aus der Tetracarbonsäure und dem Tetraamin gebildet wird;
   b) die Polykondensation unter hydrothermalen Bedingungen durch Erhitzen des in Schritt a) erhaltenen stöchiometrischen Salzes in Wasser als Lösungsmittel unter Druck auf Temperaturen über 100 °C durchgeführt wird,
      wobei anhand der Temperatur und/oder der Dauer der Polykondensation der Wert von n und m und somit das Molekulargewicht und/oder das Ausmaß an Ringschlüssen im dabei erhaltenen Polykondensat gesteuert werden; und
   c) gegebenenfalls eine lösungsmittelfreie Wärmebehandlung des Polykondensats durchgeführt wird, um vollständigen Ringschluss zu bewirken.

Die Erfinder haben nämlich im Gegensatz zu früheren Beobachtungen überraschenderweise festgestellt, dass die Polykondensation zu den obigen Polybenzimidazolen mit anelliertem 5- oder 6-gliedrigem Ring unter hydrothermalen Bedingungen sehr wohl zu definierten Produkten durchführbar ist, wenn von stöchiometrischen Salzen der jeweiligen Reaktanten, d.h. Tetracarbonsäure und Tetraamin, ausgegangen wird. Bei der Herstellung dieser Salze ist es zudem nicht erforderlich, unter einer Stickstoff- oder sonstigen Schutzgasatmosphäre zu arbeiten. Das heißt, die Säure und das Amin können einfach in wässriger Suspension vermischt und durch Rühren zum stöchiometrischen Salz umgesetzt werden, wenngleich bevorzugt wird, die Suspension anfänglich zu kühlen und zu entgasen, um etwaige Oxidationsreaktionen noch zuverlässiger zu unterdrücken.

Gemäß vorliegender Erfindung gelingt die Polykondensation des stöchiometrischen Salzes unter hyderothermalen Bedingungen nach sehr kurzen Reaktionszeiten sowie völlig überraschend ohne jegliche Bildung von Nebenprodukten: Die nach Beendigung der Polykondensation erhaltenen wässrigen Phasen waren durchwegs klar. Zudem konnten bei Extraktion der jeweils erhaltenen Polybenzimidazole mit einer Reihe von organischen Lösungsmitteln nicht einmal Spuren von Verunreinigungen detektiert werden, wie dies die späteren Ausführungsbeispiele belegen.

Ebenso überraschend war freilich der von den Erfindern festgestellte Umstand, dass anhand der Reaktionstemperatur und der Reaktionszeit das Molekulargewicht der Polybenzimidazole bzw. das Ausmaß an Ringschlüssen im jeweils erhaltenen Polykondensat gesteuert werden können: Bei steigender Temperatur bzw. Reaktionszeit werden in Abhängikeit von den jeweiligen Reaktanten Polybenzimidazole mit zunehmend hohem Molekulargewicht bzw. mit zunehmendem Ausmaß an Ringschlüssen erhalten. Dadurch ist es möglich, definierte Polymere für unterschiedliche Anwendungszwecke zu erzeugen - beispielsweise auch, indem nicht vollständig ringgeschlossene Zwischenprodukte (ähnlich wie im Stand der Technik beschrieben) isoliert und modifiziert werden, sei es an freien Carboxyl- oder Aminogruppen. Diese Zwischenprodukte können anschließend durch eine lösungsmittelfreie Wärmebehandlung vollständig ringgeschlossen werden.

Allerdings haben die Erfinder als weiteren überraschenden Umstand mittels IR-Analyse festgestellt, dass im Verlauf der erfindungsgemäßen Hydrothermalsynthese von Polybenzimidazolen der Formel (2) praktisch ausschließlich Zwischenprodukte mit freien Carbonsäure-Funktionalitäten gebildet wurden. Bei den Synthesen der Polybenzimidazole der Formel (1) konnten die Erfinder hingegen gar keine Zwischenprodukte detektieren. Ohne sich auf eine bestimmte Theorie festlegen zu wollen, nehmen die Erfinder daher an, dass hydrothermale Bedingungen den Ringschluss zum Benzimidazol gegenüber der alternativen Imidierungsreaktion begünstigen.

In bevorzugten Ausführungsformen der vorliegenden Erfindung wird ein Polybenzimidazol der Formel (1) gemäß nachstehendem Reaktionsschema hergestellt, indem
- in Schritt a) Naphthalintetracarbonsäure, NTCA, mit Diaminobenzidin, DAB, zum stöchiometrischen Salz NTCA·DAB umgesetzt wird, das
- in Schritt b) unter hydrothermalen Bedingungen zum Polybenzimidazol der Formel (1) polykondensiert wird:

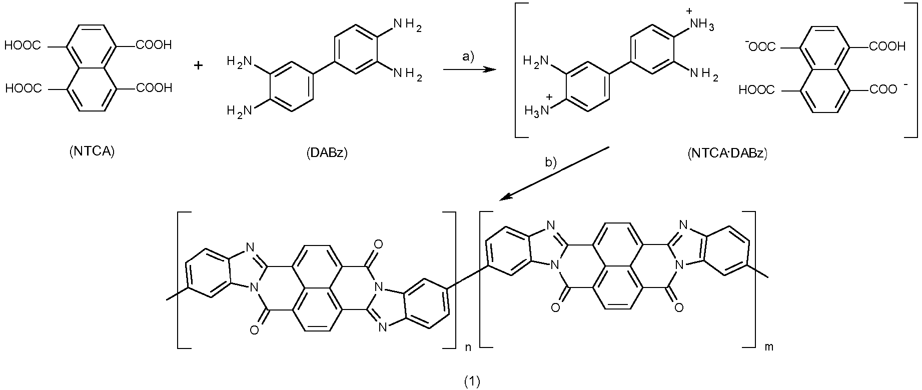

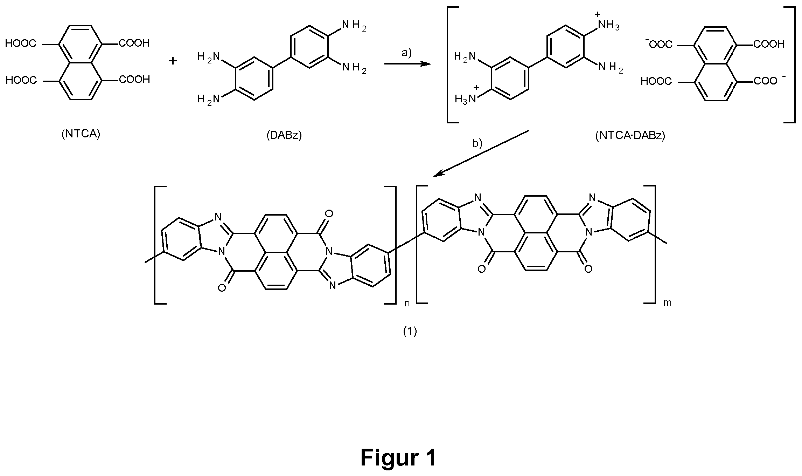

Eine vergrößerte Ansicht dieses Reaktionsschemas ist in Fig. 1 dargestellt.

Wie bereits erwähnt, existieren in solchen "Polyperinonen" -wie auch in den nicht vollständig ringgeschlossenen Zwischenstufen - cis-trans-Isomerien, weswegen in den Endprodukten die Sauerstoffe der beiden Amidcarboxylgruppen in entgegengesetzte Richtungen oder in die gleiche Richtung weisen können, wie dies in den Formeln (1) und (2) anhand der unterschiedlichen, n-mal bzw. m-mal vorhandenen Einheiten dargestellt ist. Genau genommen eixstiert auch noch eine dritte Variante der Einheiten, nämlich jene, in der beide Sauerstoffatome nicht nach unten, sondern nach oben weisen. Aus Gründen der Übersichtlichkeit wird hierin auf die explizite Darstellung dieser Variante verzichtet. Das Verhältnis zwischen diesen Einheiten ist nicht eindeutig feststellbar und aufgrund ihrer identischen chemischen Eigenschaften auch nicht wesentlich für die Eigenschaften der erhaltenen Polymere, weswegen hierin nicht näher darauf eingegangen wird.

Bei der oben dargestellten Reaktion zu Polybenzimidazolen der Formel (1) wurde seitens der Erfinder - ohne sich auf eine bestimmte Theorie festlegen zu wollen - festgestellt, dass in diesen Fällen, bei denen ein 6-gliedriger Ring zwischen dem Imidazol und dem zentralen Naphthalin gebildet wird, offenbar die beiden Ringschluss-Kondensationen gegenüber der Polykondensation zu den "A-A-A"-Polymeren begünstigt sind, so dass letztere Reaktion den geschwindigkeitsbestimmenden Schritt darstellt. Als Folge dessen ist in diesen Synthesen anhand der Reaktionstemperatur bzw. -zeit das Molekulargewicht der erhaltenen Polybenzimidazole steuerbar.

Wird die Polykondensation in Schritt b) bei einer Temperatur von nicht mehr als 250 °C und/oder für eine Dauer von nicht mehr als 1 h durchgeführt, wird ein Polybenzimidazol (1) mit relativ niedrigem Molekulargewicht erhalten. Wird die Polykondensation bei einer Temperatur von nicht mehr als 300 °C und/oder für eine Dauer von nicht mehr als 2 h durchgeführt wird, wird ein Polybenzimidazol (1) mit mittlerem Molekulargewicht erhalten, und wird sie bei einer Temperatur von über 300 °C und/oder für eine Dauer von zumindest 2 h durchgeführt, wird ein Polybenzimidazol (1) mit relativ hohem Molekulargewicht erhalten, wie dies jeweils anhand von IR-Analysen mittels Vergleich der Intensitäten von Banden reaktiver Anhydrid-Endgruppen mit jenen des jeweiligen Endprodukts feststellbar ist.

In alternativen bevorzugten Ausführungsformen der Erfindung wird ein Polybenzimidazol der Formel (2) gemäß nachstehendem Reaktionsschema hergestellt, indem
- in Schritt a) Pyromellitsäure, PMA, mit Diaminobenzidin, DAB, zum stöchiometrischen Salz PMA·DAB umgesetzt wird, das
- in Schritt b) unter hydrothermalen Bedingungen zu einem nicht oder nur teilweise ringgeschlossenen Zwischenprodukt (3) und/oder zum Polybenzimidazol der Formel (2) polykondensiert wird: 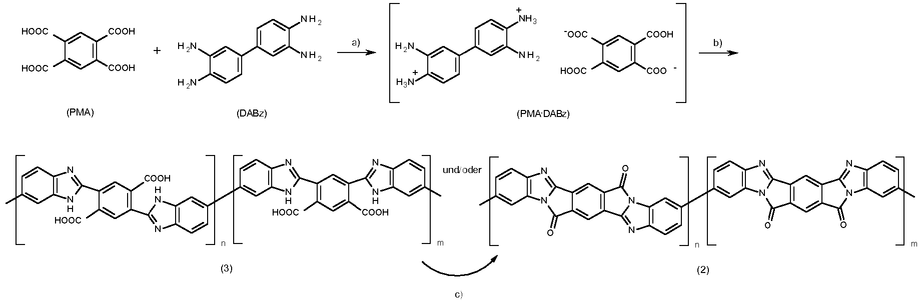 wonach gegebenenfalls Schritt c) durchgeführt wird, um das Zwischenprodukt (3) vollständig in das Polybenzimidazol der Formel (2) überzuführen.

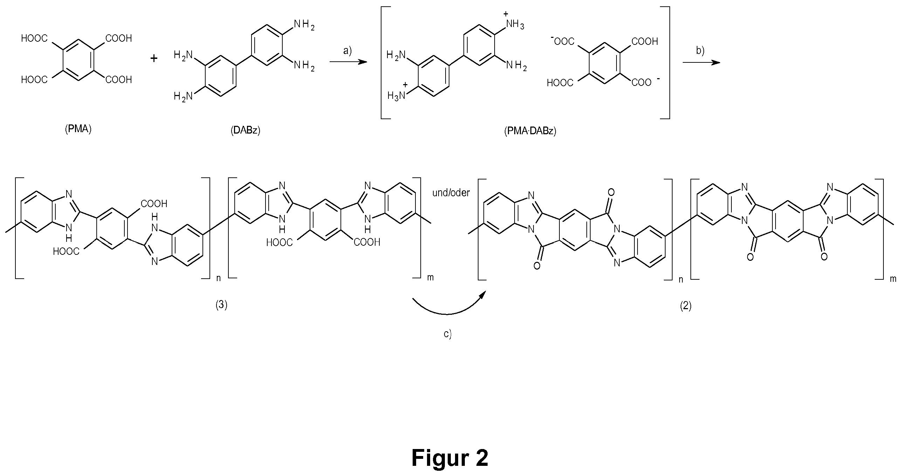

Eine vergrößerte Ansicht des obigen Reaktionsschemas ist in Fig. 2 dargestellt.

Im Gegensatz zu den zuvor beschriebenen Synthesen zum Erhalt von Polybenzimidazolen der Formel (1) ist bei diesen Polykondensationen unter Ausbildung von 5-gliedrigen, an die Imidazole anellierten Ringen in Polybenzimidazolen der Formel (2) offenbar nicht das Kettenwachstum, sondern die Zyklisierung der noch freie Carboxylfunktionalitäten enthaltenden Zwischenprodukte der geschwindigkeitsbestimmende Schritt, was bedeutet, dass unter den hydrothermalen Bedingungen zunächst das Kettenwachstum vollständig abläuft, wonach erst die Kondensation der anellierten Ringe erfolgt. Aus diesem Grund ist in diesem Fall gemäß vorliegender Erfindung anhand der Reaktionstemperatur bzw. -zeit das Ausmaß dieser Ringschlüsse steuerbar.

Wird die Polykondensation in Schritt b) bei einer Temperatur von nicht mehr als 250 °C und/oder für eine Dauer von nicht mehr als 1 h durchgeführt, wird im Wesentlichen nur das Zwischenprodukt (3) hergestellt, das in einem nachfolgenden Schritt c) zum Polybenzimidazol (2) ringgeschlossen werden kann. Wird die Polykondensation bei einer Temperatur von nicht mehr als 275 °C und/oder für eine Dauer von nicht mehr als 2 h durchgeführt wird, wird ein Gemisch aus dem Polybenzimidazol (2) und dem Zwischenprodukt (3) hergestellt, das im nachfolgenden Schritt c) vollständig zum Polybenzimidazol (2) ringgeschlossen wird. Wird jedoch die Polykondensation bei einer Temperatur von zumindest 350 °C und/oder für eine Dauer von zumindest 2 h durchgeführt, wird im Wesentlichen nur das Polybenzimidazol (2) hergestellt.

Die Bedingungen der optionalen lösungsmittelfreien Wärmebehandlung in Schritt c) sind zwar nicht speziell eingeschränkt, solange jeweils ein vollständig ringgeschlossenes Polybenzimidazol erhalten wird. Vorzugsweise wird sie jedoch bei einer Temperatur von zumindest 200 °C, noch bevorzugter zumindest 300 °C, insbesondere bei etwa 400 °C, durchgeführt, um sie in relativ kurzer Zeit abschließen zu können.

### KURZBESCHREIBUNG DER ZEICHNUNGEN

In der Folge wird die vorliegende Erfindung anhand von nichteinschränkenden Beispielen unter unter Bezugnahme auf die beiliegenden Zeichungen näher beschrieben, die Folgendes darstellen:
Fig. 1 ist eine vergrößerte Ansicht des Reaktionsschemas zur Herstellung von Polybenzimidazolen der Formel (1);
Fig. 2 ist eine vergrößerte Ansicht des Reaktionsschemas zur Herstellung von Polybenzimidazolen der Formel (2);
die Fig. 3 und 4 zeigen das IR- bzw. das ¹H-NMR-Spektrum des in Beispiel 1 hergestellten stöchiometrischen Salzes;
die Fig. 5 bis 7 zeigen die IR-Spektren der in den Beispielen 2, 4 und 5 hergestellten Polybenzimidazole der Formel (1);
die Fig. 8 und 9 zeigen das IR- bzw. das ¹H-NMR-Spektrum des in Beispiel 7 hergestellten stöchiometrischen Salzes; und
die Fig. 10 und 11 zeigen die IR-Spektren der in den Beispielen 8 und 9 hergestellten Polybenzimidazole der Formel (2).

### BEISPIELE

### Synthesebeispiel 1

### Herstellung von 1,4,5,8-Naphthalintetracarbonsäure (NTCA)

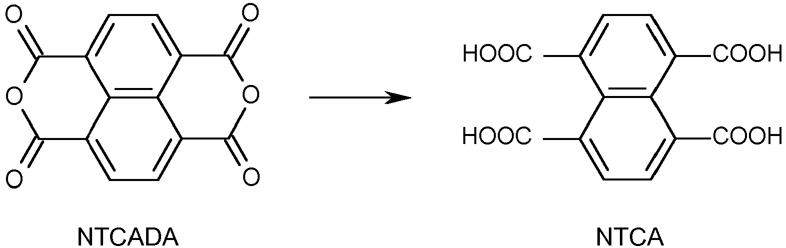

Zur Hydrolyse des im Handel erstandenen Anhydrids zur Säure wurden 1,0057 g Naphthalintetracarbonsäuredianhydrid (NTCADA) (3,75 mmol, 1 Äqu.) in 50 ml 1 M NaOH unter Rühren bei Raumtemperatur gelöst. Die klare Lösung wurde im Anschluss mittels Eisbad gekühlt und konz. HCl wurde zugetropft, bis ein pH-Wert von 1 erreicht war. Während des Ansäuerns fiel Naphthalintetracarbonsäure (NTCA) als weißer Feststoff aus, der durch Zentrifugieren isoliert, aber nicht getrocknet wurde, um erneuten Ringschluss zum Anhydrid zu vermeiden.

### Beispiel 1 - Schritt a) des erfindungsgemäßen Verfahrens

### Herstellung eines Monomersalzes aus NTCA und 3,3'-Diaminobenzidin

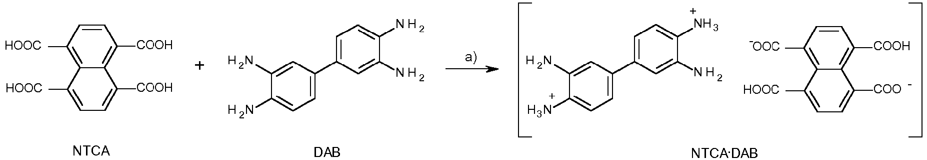

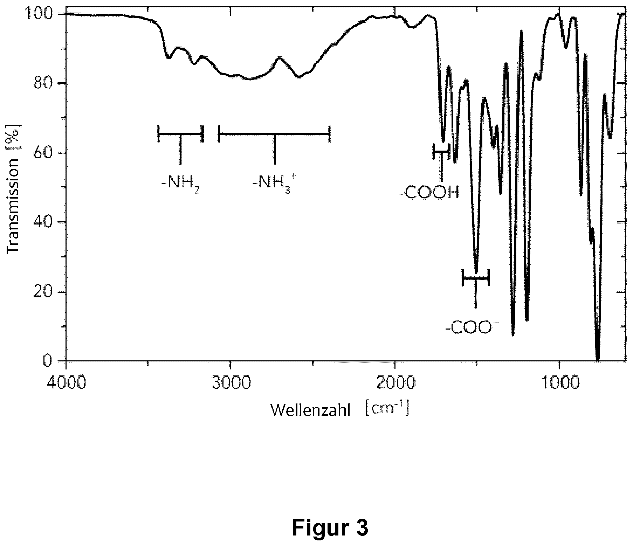

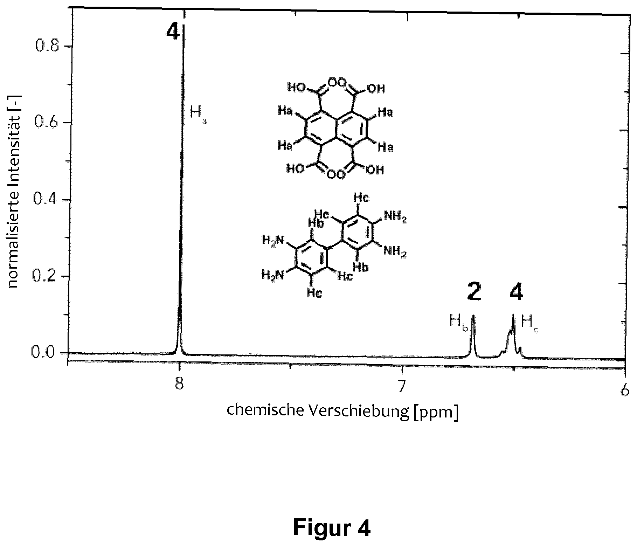

Die in Synthesebeispiel 1 erhaltene NTCA (3,75 mmol, 1 Äqu.) wurde in 750 ml dest. H₂O suspendiert und eisgekühlt, während die Suspension 10 min lang mit Ar entgast wurde. Zur kalten, entgasten Suspension wurden 0,8035 g 3,3'-Diaminobenzidin (DAB) (3,75 mmol, 1 Aqu.) zugegeben und über Nacht gerührt, wobei die Temperatur langsam auf Raumtemperatur anstieg. Dabei entstand eine leicht bräunliche Suspension. Der gebildete Feststoff wurde abfiltriert, gründlich mit H₂O und anschließend EtOH gewaschen und im Exsikkator getrocknet. In den Fig. 3 und 4 sind das FTIR-ATR- bzw. ¹H-NMR-Spektrum des so erhaltenen stöchiometrischen Salzes NTCA·DAB dargestellt. Das IR-Spektrum unterscheidet sich deutlich von den beiden Edukten NTCA und DAB und enthält zusätzlich folgende charakteristische Banden: v(NH₂) = 3375 cm⁻¹ und 3220 cm⁻¹, v(NH₃⁺) = 2885 cm⁻¹ und 2585 cm⁻¹, v(C=O, Carboxylat) = 1505 cm⁻¹ und v(C=O, Carbonsäure) = 1710 cm⁻¹. Im ¹H-NMR-Spektrum ist anhand der Integrale eindeutig ein DAB:NTCA-Molverhältnis von 1:1 erkennbar.

### Beispiel 2 - Schritt b) des erfindungsgemäßen Verfahrens

### Hydrothermalpolymerisation zum Polybenzimidazol der Formel (1)

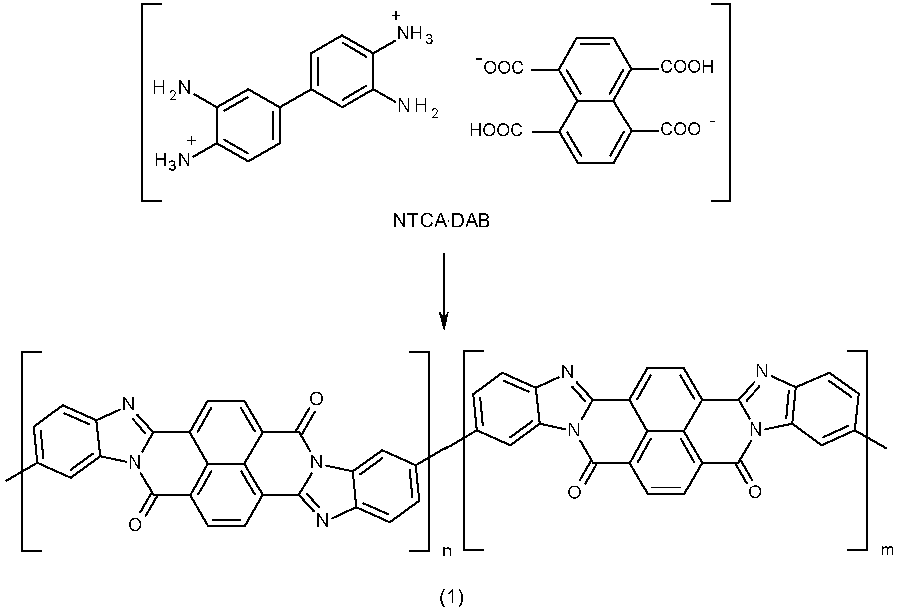

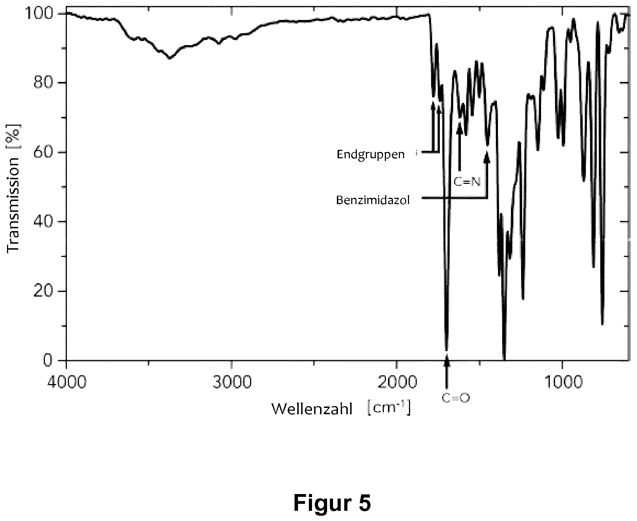

150 mg NTCA·DAB wurden in einem Glasliner in 40 ml dest. H₂O durch gründlich suspendiert. Der Liner wurde in einen Mikrowellenautoklav (120 ml) übergeführt. Daraufhin wurde das Reaktionsgemisch unter Rühren innerhalb von 15 min auf 250 °C erhitzt, und diese Temperatur wurde weitere 15 min lang gehalten. Das anschließende Abkühlen erfolgte mittels eines Druckluftstroms und nahm etwa 30 min in Anspruch. Die nach Öffnen des Autoklavs erhaltene tiefschwarze Suspension wurde filtriert, wobei ein schwarzer Feststoff und eine klare Flüssigkeit erhalten wurden. Der Feststoff wurde mit dest. H₂O und anschließend mit EtOH gründlich gewaschen und bei 80 °C im Vakuumtrockenschrank getrocknet. In Fig. 5 ist das FTIR-ATR-Spektrum des Feststoffs dargestellt, das bestätigt, dass es sich dabei um das gewünschte Polybenzimidazol (1) handelte. Die charakteristischen Banden sind: v(C=O) = 1700 cm⁻¹, v(C=N) = 1615 cm⁻¹ und v(Benzimidazol) = 1450 cm⁻¹. Des Weiteren sind allerdings noch intensive Banden bei 1780 cm⁻¹ und 1740 cm⁻¹ vorhanden, was literaturgemäß die Gegenwart von reaktiven Anhydrid-Endgruppen anzeigt. Die deutliche Sichtbarkeit dieser Endgruppen-Banden ist gleichbedeutend mit einem relativ niedrigen Molekulargewicht des Polybenzimidazols (1).

Extraktion von Proben des Polybenzimidazols der Formel (1) mit verschiedenen organischen Lösungsmitteln (MeOH, EtOH, iPrOH, Phenol, PE, EE, CDCl₂, CDCl₃, Aceton, Acetonitril) ergab jeweils klare Filtrate, die keinerlei Verunreinigungen enthielten. Eine nähere Untersuchung der wässrigen Phase nach der Hydrothermalpolymerisation ergab, dass diese ebenfalls keinerlei Nebenprodukte der Hydrothermalpolymerisation enthielt.

### Beispiel 3 - Schritt b) des erfindungsgemäßen Verfahrens

### Hydrothermalpolymerisation zum Polybenzimidazol der Formel (1)

130 mg NTCA·DAB wurden in einem Glasliner in 25 ml dest. H₂O gründlich suspendiert. Der Liner wurde in einen ungerührten Batch-Stahlautoklav (80 ml) übergeführt. Daraufhin wurde das Reaktionsgemisch ohne Rühren mithilfe eines externen Heizofens möglichst rasch auf 250 °C erhitzt (Dauer: ca. 45 min), und diese Temperatur wurde weitere 15 min lang gehalten (Gesamtreaktionszeit: 60 min). Anschließend wurde der Stahlautoklav in kaltem Leitungswasser abgeschreckt. Die nach Öffnen des Autoklavs erhaltene tiefschwarze Suspension wurde filtriert, wobei neben einem schwarzen Feststoff eine klare Flüssigkeit erhalten wurde. Der Feststoff wurde mit dest. H₂O und anschließend mit EtOH gründlich gewaschen und bei 80 °C im Vakuumtrockenschrank getrocknet. Im FTIR-ATR-Spektrum des Feststoffs waren neben den charakteristischen Polybenzimidazol-Banden bei 1700 cm⁻¹, 1615 cm⁻¹ und 1450 cm⁻¹ auch in diesem Fall intensive Banden reaktiver Anhydrid-Endgruppen bei 1780 cm⁻¹ und 1740 cm⁻¹ zu erkennen, worauf folgt, dass trotz längerer Reaktionszeit erneut nur ein relativ niedriges Molekulargewicht erzielt worden war.

Auch in diesem Fall lieferten Extraktionsversuche des Polybenzimidazols der Formel (1) und Untersuchungen der wässrigen Phase nach der Hydrothermalpolymerisation keinerlei Ergebnis.

### Beispiel 4 - Schritt b) des erfindungsgemäßen Verfahrens

### Hydrothermalpolymerisation zum Polybenzimidazol der Formel (1)

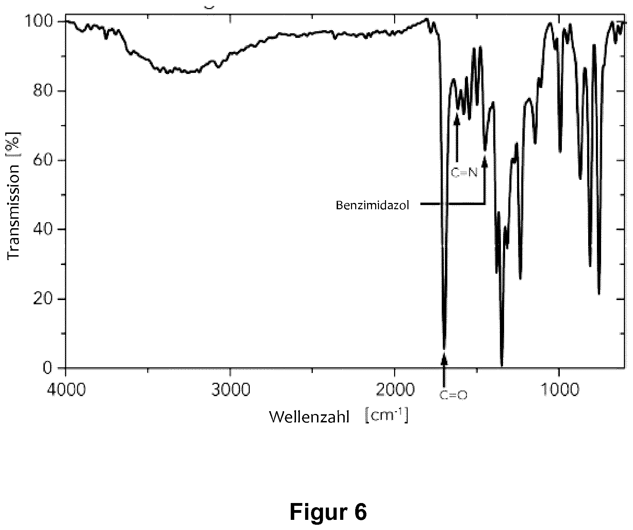

130 mg NTCA·DAB wurden in einem Glasliner in 25 ml dest. H₂O gründlich suspendiert. Der Liner wurde in einen ungerührten Batch-Stahlautoklav (80 ml) übergeführt, der mit Argon mit einem Druck von 10 bar beaufschlagt wurde. Anschließend wurde das Reaktionsgemisch ohne Rühren mithilfe eines externen Heizofens möglichst rasch auf 300 °C erhitzt (Dauer: ca. 60 min), und diese Temperatur wurde weitere 60 min lang gehalten (Gesamtreaktionsdauer: 120 Minuten). Anschließend wurde der Stahlautoklav in kaltem Leitungswasser abgeschreckt. Die nach Öffnen des Autoklavs erhaltene tiefschwarze Suspension wurde filtriert, wobei neben einem schwarzen Feststoff eine klare Flüssigkeit erhalten wurde. Der gebildete Feststoff wurde gründlich mit dest. H₂O und anschließend mit EtOH gewaschen und bei 80 °C im Vakuumtrockenschrank getrocknet. In Fig. 6 ist das FTIR-ATR-Spektrum des Feststoffs dargestellt. Neben den charakteristischen Polybenzimidazol-Banden waren in diesem Fall nur sehr schwache Banden reaktiver Anhydrid-Endgruppen erkennbar. Die gegenüber den Beispielen 2 und 3 deutlich reduzierte Intensität dieser Banden ist indikativ für ein deutlich höheres Molekulargewicht.

Erneut lieferten Extraktionsversuche des Polybenzimidazols der Formel (1) und Untersuchungen der wässrigen Phase nach der Hydrothermalpolymerisation keinerlei Ergebnis.

### Beispiel 5 - Schritt b) des erfindungsgemäßen Verfahrens

### Hydrothermalpolymerisation zum Polybenzimidazol der Formel (1)

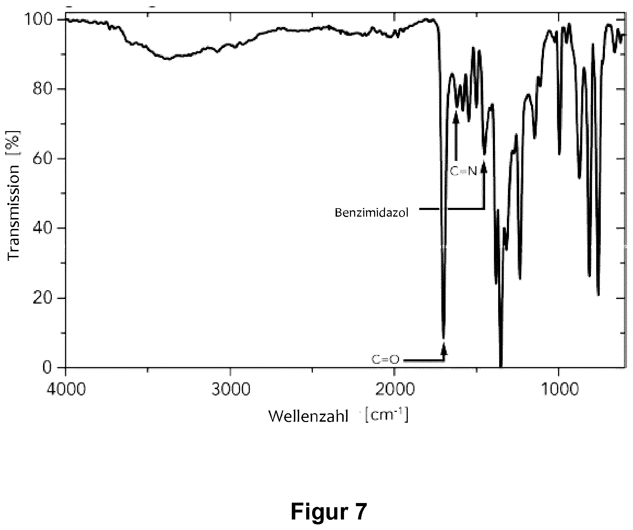

Beispiel 4 wurde im Wesentlichen wiederholt, mit der Ausnahme, dass das Reaktionsgemisch innerhalb von 90 min auf eine Temperatur von 350 °C erhitzt wurde, die weitere 30 min lang gehalten wurde. Wie in Beispiel 4 wurde ein schwarzer Feststoff erhalten, dessen FTIR-ATR-Spektrum in Fig. 7 dargestellt ist. Außer den charakteristischen Polybenzimidazol-Banden waren in diesem Fall keinerlei Banden reaktiver Anhydrid-Endgruppen erkennbar, was auf ein relativ hohes Molekulargewicht des erhaltenen Polybenzimidazols der Formel (1) schließen lässt.

Extraktionsversuche des Polybenzimidazols der Formel (1) und Untersuchungen der wässrigen Phase nach der Hydrothermalpolymerisation lieferten keinerlei Ergebnis.

### Beispiel 6 - Schritt b) des erfindungsgemäßen Verfahrens

### Hydrothermalpolymerisation zum Polybenzimidazol der Formel (1)

Beispiel 4 wurde im Wesentlichen wiederholt, mit der Ausnahme, dass das Reaktionsgemisch nicht nur 1 h, sondern 11 h lang auf der Temperatur von 300 °C gehalten wurde, so dass Gesamtreaktionszeit 12 h betrug. Das FTIR-ATR-Spektrum des isolierten schwarzen Feststoffs zeigte auch in diesem Fall außer den charakteristischen Polybenzimidazol-Banden keinerlei Banden reaktiver Anhydrid-Endgruppen, was erneut für ein relativ hohes Molekulargewicht des erhaltenen Polybenzimidazols der Formel (1) spricht.

Extraktionsversuche des Polybenzimidazols der Formel (1) und Untersuchungen der wässrigen Phase nach der Hydrothermalpolymerisation lieferten keinerlei Ergebnis.

### Beispiel 7 - Schritt a) des erfindungsgemäßen Verfahrens

### Herstellung eines Monomersalzes aus Pyromellitsäure und DAB

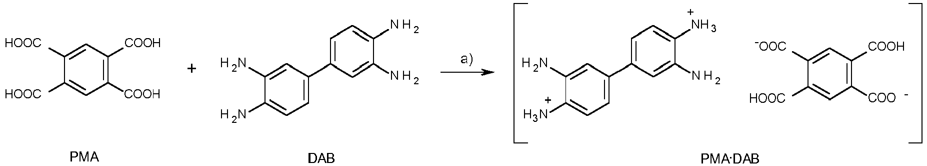

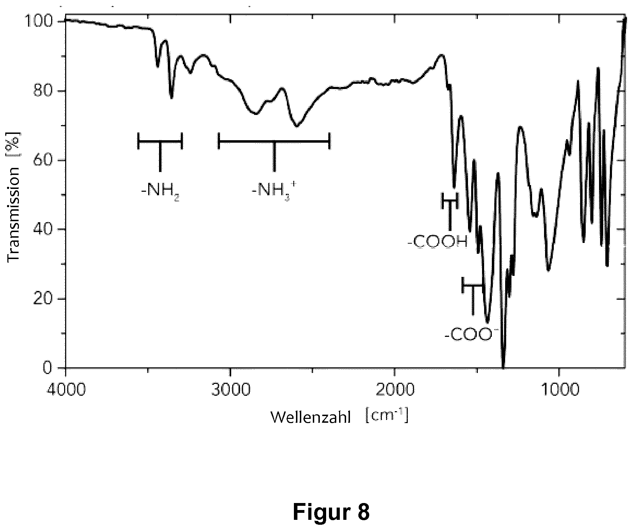

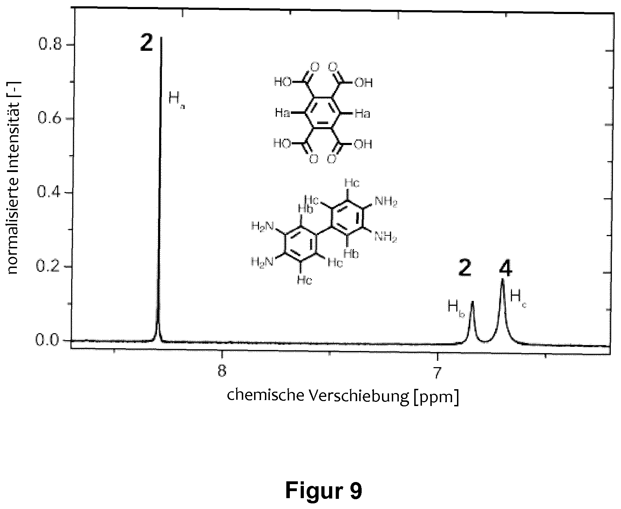

Zur Herstellung eines stöchiometrischen Salzes wurden 0,9531 g Pyromellitsäure (PMA) (3,75 mmol, 1 Aqu.) in 750 ml dest. H₂O gelöst und eisgekühlt, während die Lösung 10 min lang mit Ar entgast wurde. Zur kalten, entgasten Suspension wurden 0,8035 g 3,3'-Diaminobenzidin (DAB) (3,75 mmol, 1 Aqu.) zugegeben und über Nacht gerührt, wobei die Temperatur langsam auf Raumtemperatur anstieg. Dabei entstand eine tore Suspension. Der gebildete Feststoff wurde abfiltriert, gründlich mit H₂O und anschließend EtOH gewaschen und im Exsikkator getrocknet. In den Fig. 8 und 9 sind das FTIR-ATR- bzw. ¹H-NMR-Spektrum des so erhaltenen stöchiometrischen Salzes PMA·DAB dargestellt. Das IR-Spektrum unterscheidet sich deutlich von den beiden Edukten PMA und DAB und enthält zusätzlich folgende charakteristische Banden: v(NH₂) = 3435 cm⁻¹ und 3355 cm⁻¹, v(NH₃⁺) = 2885 cm⁻¹ und 2600 cm⁻¹, v(C=O, Carboxylat) = 1500 cm⁻¹ und v(C=O, Carbonsäure) = 1685 cm⁻¹. Im ¹H-NMR-Spektrum ist anhand der Integrale eindeutig ein DAB:PMA-Molverhältnis von 1:1 erkennbar.

### Beispiel 8 - Schritt b) des erfindungsgemäßen Verfahrens

### Hydrothermalpolymerisation zu einem Gemisch aus einem Polybenzimidazol der Formel (2) und einem Zwischenprodukt der Formel (3)

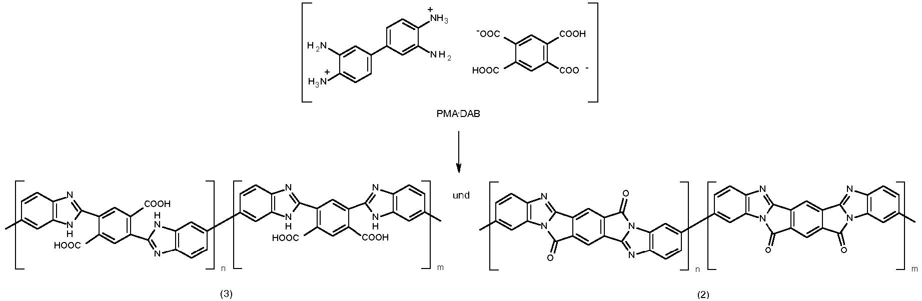

150 mg PMA·DAB wurden analog zur Reaktionsführung in Beispiel 2 in einem Glasliner in 40 ml dest. H₂O durch gründlich suspendiert. Der Liner wurde in einen Mikrowellenautoklav (120 ml) übergeführt. Daraufhin wurde das Reaktionsgemisch unter Rühren innerhalb von 15 min auf 250 °C erhitzt, und diese Temperatur wurde weitere 15 min lang gehalten. Das anschließende Abkühlen erfolgte mittels eines Druckluftstroms und nahm etwa 30 min in Anspruch. Die nach Öffnen des Autoklavs erhaltene orangefarbene Suspension wurde filtriert, wobei ein orangefarbener Feststoff und eine klare Flüssigkeit erhalten wurden. Der Feststoff wurde mit dest. H₂O und anschließend mit EtOH gründlich gewaschen und bei 80 °C im Vakuumtrockenschrank getrocknet. Dessen FTIR-ATR-Spektrum bestätigt, dass es sich dabei um ein Gemisch aus dem gewünschten Polybenzimidazol (2) und einem Zwischenprodukt der Formel (3) mit freien Carboxylgruppen handelte. Die charakteristischen Banden sind: v(C=N/C=C) = 1630 cm⁻¹, v(Ringschwingung) = 1585 cm⁻¹ (die für die Konjugation zwischen Benzol- und Imidazol-Ring charakteristisch ist) und v(Benzimidazol) = 1445 cm⁻¹. Die für das vollständig zyklisierte Produkt charakteristische Bande v(C=O) = 1760 cm⁻¹ ist allerdings kaum zu erkennen, woraus geschlossen werden kann, dass hauptsächlich das Zwischenprodukt der Formel (3) gebildet worden war.

### Beispiel 9 - Schritt c) des erfindungsgemäßen Verfahrens

### Lösungsmittelfreie Wärmebehandlung

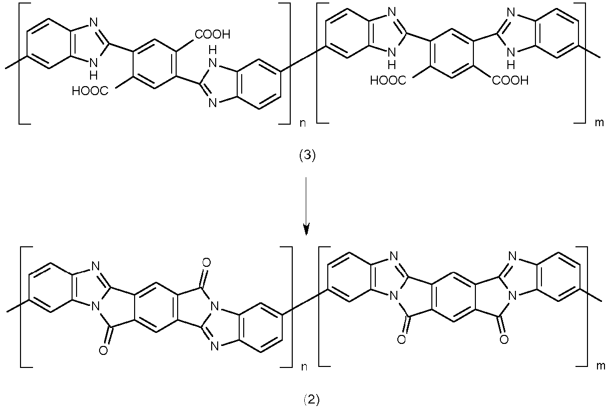

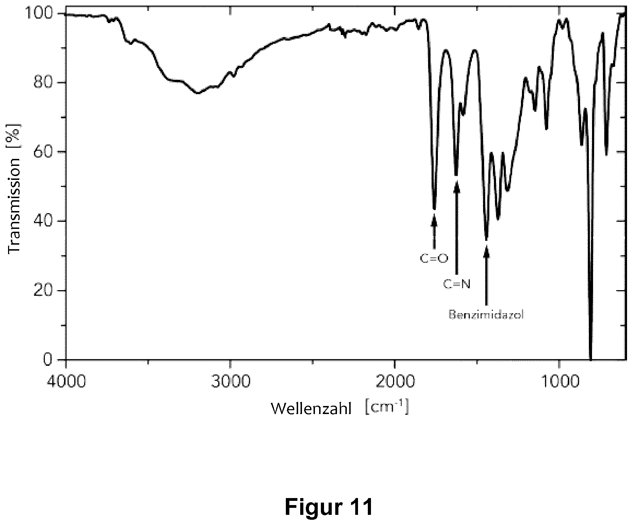

Der in Beispiel 8 isolierte orangefarbene Feststoff wurde einer lösungsmittelfreien Wärmebehandlung bei 400 °C (30 min Haltezeit) unterzogen, um vollständigen Ringschluss herbeizuführen und das Zwischenprodukt der Formel (3) in das Polybenzimidazol der Formel (2) überzuführen. In Fig. 11 ist das FTIR-ATR-Spektrum des dabei erhaltenen dunkelbraunen Feststoffs dargestellt, aus dem hervorgeht, dass keine freien Carboxylgruppen mehr vorhanden waren, dafür aber die C=O-Bande bei 1760 cm⁻¹ nun stark ausgeprägt war: v(C=O) = 1760 cm⁻¹, v(C=N) = 1620 cm⁻¹ und v(Benzimidazol) = 1440 cm⁻¹.

Analoge Extraktionsversuche mit dem Polybenzimidazol der Formel (2) wie für jenes der Formel (1) sowie Untersuchungen der wässrigen Phase nach der Hydrothermalpolymerisation lieferten keinerlei Ergebnis, so dass es auch in diesem Fall zu keinerlei Bildung von Nebenprodukten gekommen war.

### Beispiel 10 - Schritt b) des erfindungsgemäßen Verfahrens

### Hydrothermalpolymerisation zu einem Gemisch aus einem Polybenzimidazol der Formel (2) und einem Zwischenprodukt der Formel (3)

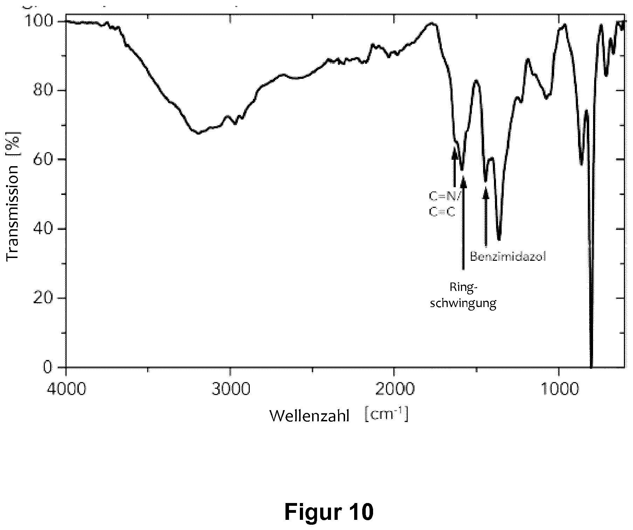

130 mg PMA·DAB wurden in einem Glasliner in 25 ml dest. H₂O gründlich suspendiert. Der Liner wurde in einen ungerührten Batch-Stahlautoklav (80 ml) übergeführt, der mit Argon mit einem Druck von 10 bar beaufschlagt wurde. Anschließend wurde das Reaktionsgemisch ohne Rühren mithilfe eines externen Heizofens möglichst rasch auf 275 °C erhitzt (Dauer: ca. 60 min), und diese Temperatur wurde weitere 60 min lang gehalten (Gesamtreaktionszeit: 120 min). Anschließend wurde der Stahlautoklav in kaltem Leitungswasser abgeschreckt. Die nach Öffnen des Autoklavs erhaltene bräunliche Suspension wurde filtriert, wobei neben einem braunen Feststoff eine klare Flüssigkeit erhalten wurde. Der Feststoff wurde mit dest. H₂O und anschließend mit EtOH gründlich gewaschen und bei 80 °C im Vakuumtrockenschrank getrocknet. Das FTIR-ATR-Spektrum dieses Feststoffs war nahezu identisch mit jenem aus Fig. 10, allerdings mit einer etwas stärkeren C=O-Bande bei 1760 cm⁻¹, was auf einen höheren Anteil an bereits ringgeschlossenem Polybenzimidazol der Formel (2) schließen lässt.

### Beispiel 11 - Schritt c) des erfindungsgemäßen Verfahrens

### Lösungsmittelfreie Wärmebehandlung

Eine Wärmebehandlung des braunen Feststoffs analog zu Beispiel 9 lieferte einen dunkelbraunen Feststoff mit einem FTIR-ATR-Spektrum, das praktisch identisch mit jenem aus Fig. 11 war und vollständigen Ringschluss zum Polybenzimidazol der Formel (2) anzeigt.

Extraktionsversuche des Polybenzimidazols der Formel (2) und Untersuchungen der wässrigen Phase nach der Hydrothermalpolymerisation lieferten keinerlei Ergebnis.

### Beispiel 12 - Schritt b) des erfindungsgemäßen Verfahrens

### Direkte Polykondensation von PMA·DAB zum Polybenzimidazol der Formel (2)

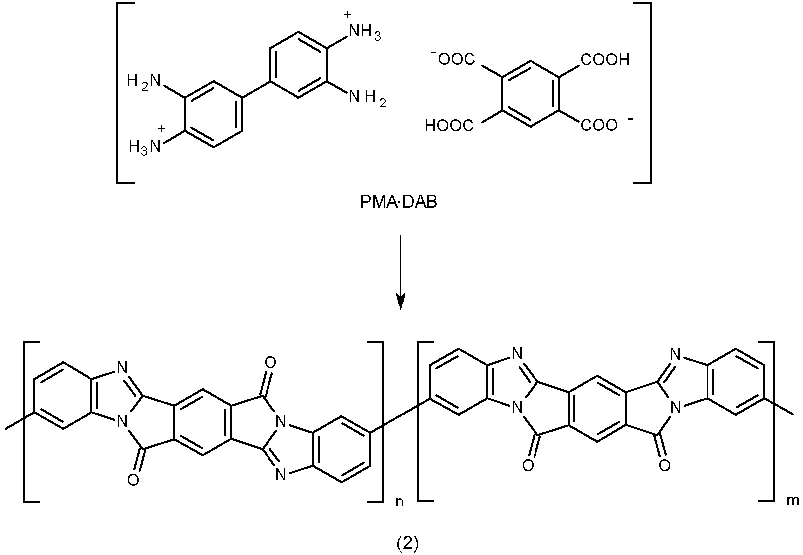

Beispiel 10 wurde mit 130 mg PMA-DAB in 25 ml dest. H₂O im Wesentlichen wiederholt, wobei allerdings das Reaktionsgemisch innerhalb von 90 min auf eine Temperatur von 350 °C erhitzt wurde, die weitere 90 min lang gehalten wurde. Die nach Öffnen des Autoklavs erhaltene braune Suspension wurde filtriert, wobei neben einem dunkelbraunen Feststoff eine klare Flüssigkeit erhalten wurde. Der Feststoff wurde mit dest. H₂O und anschließend mit EtOH gründlich gewaschen und bei 80 °C im Vakuumtrockenschrank getrocknet. Das FTIR-ATR-Spektrum dieses Feststoffs war praktisch identisch mit jenem aus Fig. 11, woraus geschlossen werden kann, dass in diesem Fall nur das vollständig ringgeschlossene Polybenzimidazol der Formel (2) und im Wesentlichen kein Zwischenprodukt der Formel (3) gebildet worden war.

Extraktionsversuche des Polybenzimidazols der Formel (2) und Untersuchungen der wässrigen Phase nach der Hydrothermalpolymerisation lieferten auch in diesem Fall keine Ergebnisse.

## Patentansprüche

1. Verfahren zur Herstellung von Polybenzimidazolen der nachstehenden Formel (1) oder (2), worin n und m jeweils ≥ 1 sind: 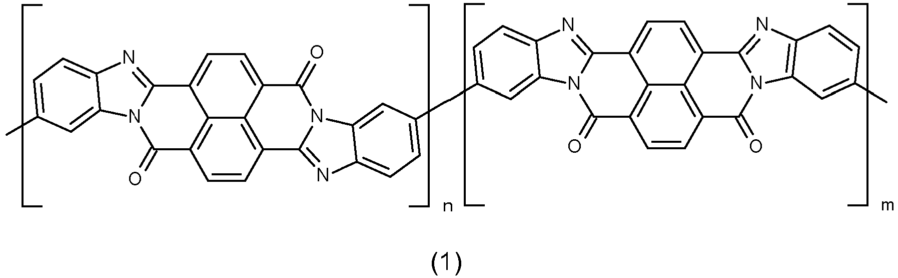 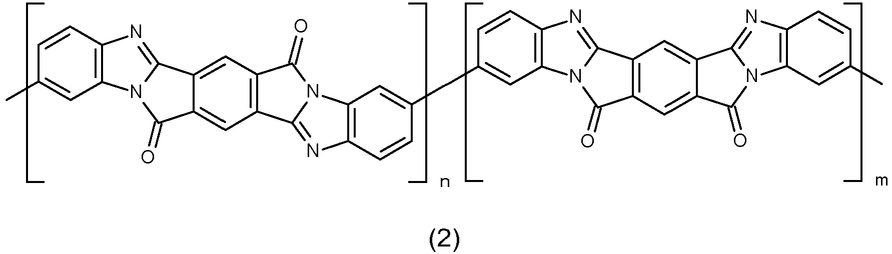
mittels Polykondensation entsprechender Tetracarbonsäuren oder Dianhydride und Tetraamine durch gemeinsames Erhitzen der Reaktanten,
**dadurch gekennzeichnet, dass**
die Herstellung der Polybenzimidazole der Formel (1) oder (2) ausgehend von den Tetracarbonsäuren und im Wesentlichen ohne jegliche Bildung von Nebenprodukten erfolgt, indem
a) zunächst ein stöchiometrisches Salz aus der Tetracarbonsäure und dem Tetraamin gebildet wird;
b) die Polykondensation unter hydrothermalen Bedingungen durch Erhitzen des in Schritt a) erhaltenen stöchiometrischen Salzes in Wasser als Lösungsmittel unter Druck auf Temperaturen über 100 °C durchgeführt wird,
wobei anhand der Temperatur und/oder der Dauer der Polykondensation der Wert von n und m und somit das Molekulargewicht und/oder das Ausmaß an Ringschlüssen im dabei erhaltenen Polykondensat gesteuert werden; und
c) gegebenenfalls eine lösungsmittelfreie Wärmebehandlung des Polykondensats durchgeführt wird, um vollständigen Ringschluss zu bewirken.

2. Verfahren nach Anspruch 1, **dadurch gekennzeichnet, dass** ein Polybenzimidazol der Formel (1) gemäß nachstehendem Reaktionsschema hergestellt wird, indem
- in Schritt a) Naphthalintetracarbonsäure, NTCA, mit Diaminobenzidin, DAB, zum stöchiometrischen Salz NTCA·DAB umgesetzt wird, das
- in Schritt b) unter hydrothermalen Bedingungen zum Polybenzimidazol der Formel (1) polykondensiert wird:

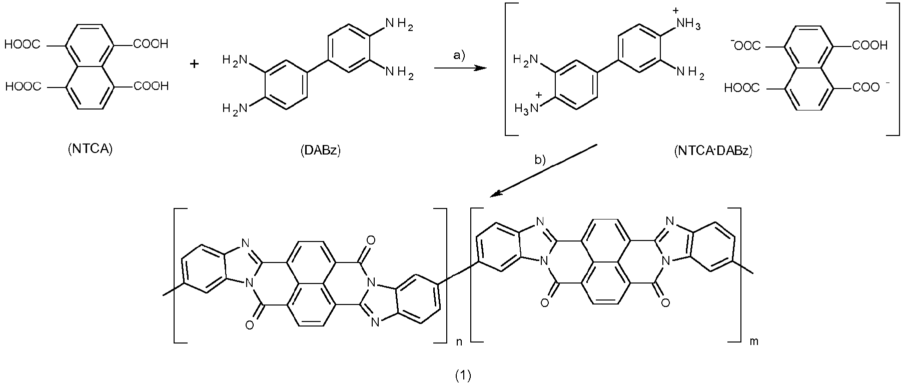

3. Verfahren nach Anspruch 2, **dadurch gekennzeichnet, dass** die Polykondensation in Schritt b) bei einer Temperatur von nicht mehr als 250 °C und/oder für eine Dauer von nicht mehr als 1 h durchgeführt wird, um ein Polybenzimidazol (1) mit relativ niedrigem Molekulargewicht herzustellen.

4. Verfahren nach Anspruch 2, **dadurch gekennzeichnet, dass** die Polykondensation in Schritt b) bei einer Temperatur von nicht mehr als 300 °C und/oder für eine Dauer von nicht mehr als 2 h durchgeführt wird, um ein Polybenzimidazol (1) mit mittlerem Molekulargewicht herzustellen.

5. Verfahren nach Anspruch 2, **dadurch gekennzeichnet, dass** die Polykondensation in Schritt b) bei einer Temperatur von über 300 °C und/oder für eine Dauer von zumindest 2 h durchgeführt wird, um ein Polybenzimidazol (1) mit relativ hohem Molekulargewicht herzustellen.

6. Verfahren nach Anspruch 1, **dadurch gekennzeichnet, dass** ein Polybenzimidazol der Formel (2) gemäß nachstehendem Reaktionsschema hergestellt wird, indem
- in Schritt a) Pyromellitsäure, PMA, mit Diaminobenzidin, DAB, zum stöchiometrischen Salz PMA·DAB umgesetzt wird, das
- in Schritt b) unter hydrothermalen Bedingungen zu einem nicht oder nur teilweise ringgeschlossenen Zwischenprodukt (3) und/oder zum Polybenzimidazol der Formel (2) polykondensiert wird: 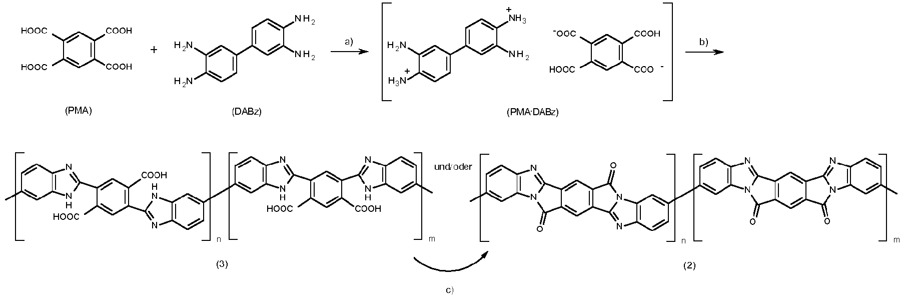 wonach gegebenenfalls Schritt c) durchgeführt wird, um das Zwischenprodukt (3) vollständig in das Polybenzimidazol der Formel (2) überzuführen.

7. Verfahren nach Anspruch 6, **dadurch gekennzeichnet, dass** die Polykondensation in Schritt b) bei einer Temperatur von nicht mehr als 250 °C und/oder für eine Dauer von nicht mehr als 1 h durchgeführt wird, um im Wesentlichen nur das Zwischenprodukt (3) herzustellen, das im nachfolgenden Schritt c) zum Polybenzimidazol (2) ringgeschlossen wird.

8. Verfahren nach Anspruch 6, **dadurch gekennzeichnet, dass** die Polykondensation in Schritt b) bei einer Temperatur von nicht mehr als 275 °C und/oder für eine Dauer von nicht mehr als 2 h durchgeführt wird, um ein Gemisch aus dem Polybenzimidazol (2) und dem Zwischenprodukt (3) herzustellen, das im nachfolgenden Schritt c) vollständig zum Polybenzimidazol (2) ringgeschlossen wird.

9. Verfahren nach Anspruch 6, **dadurch gekennzeichnet, dass** die Polykondensation in Schritt b) bei einer Temperatur von zumindest 350 °C und/oder für eine Dauer von zumindest 2 h durchgeführt wird, um im Wesentlichen nur das Polybenzimidazol (2) herzustellen.

10. Verfahren nach einem der Ansprüche 6 bis 8, **dadurch gekennzeichnet, dass** die lösungsmittelfreie Wärmebehandlung in Schritt c) bei einer Temperatur von zumindest 200 °C, vorzugsweise zumindest 300 °C, noch bevorzugter etwa 400 °C, durchgeführt wird.

## Claims

1. A method for preparing polybenzimidazoles of the following formula (1) or (2), wherein n and m are each ≥ 1: 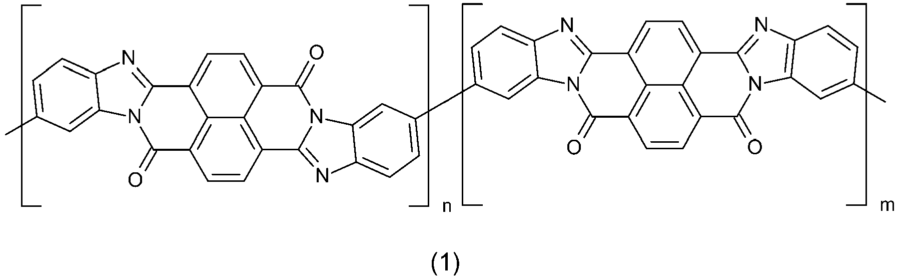 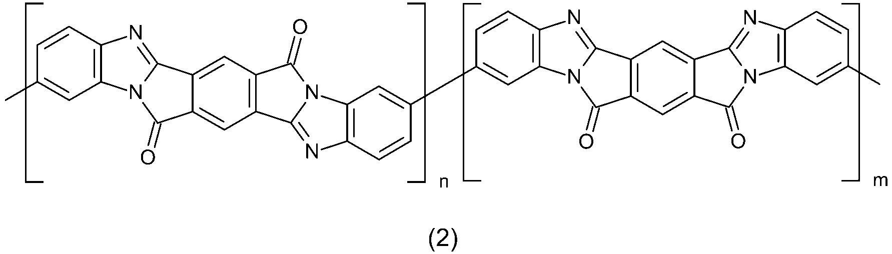
by polycondensation of corresponding tetracarboxylic acids or dianhydrides and tetra-amines by jointly heating the reactants,
**characterized in that**
the preparations of the polybenzimidazoles of formula (1) or (2) is carried out by using tetracarboxylic acids as starting material and substantially without the formation of any by-products, wherein
a) first, a stoichiometric salt is formed from the tetracarboxylic acid and the tetraamine;
b) polycondensation is carried out under hydrothermal conditions by heating the stoichiometric salt obtained in step a), in water as a solvent and under pressure, to temperatures above 100°C,
wherein the values of n and m and, thus, the molecular weight and/or the extent of cyclization in the polycondensate obtained, are/is regulated by means of the temperature and/or the duration of the polycondensation; and
c) optionally, a solvent-free thermal treatment of the polycondensate is carried out in order to achieve complete cyclization.

2. The method according to claim 1, **characterized in that** a polybenzimidazole of formula (1) is prepared according to the following reaction scheme, wherein
- in step a), naphthalene tetracarboxylic acid (NTCA) is reacted with diaminobenzidine (DAB) to form the stoichiometric salt NTCA·DAB which
- in step b), is polycondensed under hydrothermal conditions to form the polybenzimidazole of formula (1):

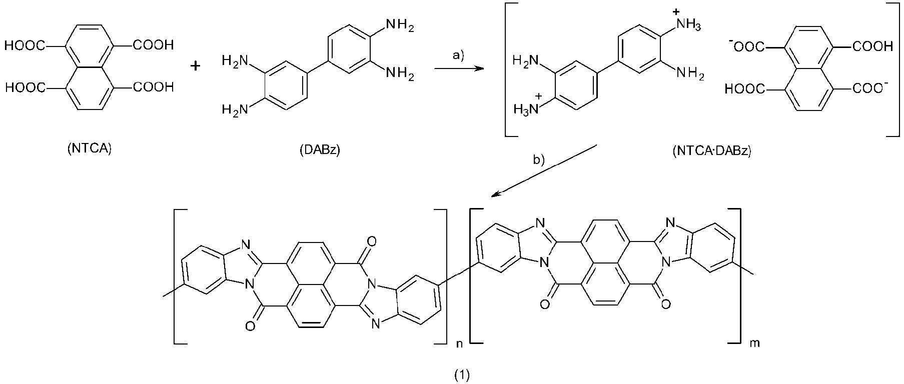

3. The method according to claim 2, **characterized in that** the polycondensation in step b) is conducted at a temperature of not more than 250°C and/or for a duration of not more than 1 h in order to prepare a polybenzimidazole (1) having a relatively low molecular weight.

4. The method according to claim 2, **characterized in that** the polycondensation in step b) is conducted at a temperature of not more than 300°C and/or for a duration of not more than 2 h in order to prepare a polybenzimidazole (1) having a medium molecular weight.

5. The method according to claim 2, **characterized in that** the polycondensation in step b) is carried out at a temperature above 300°C and/or for a duration of at least 2 h to prepare a polybenzimidazole (1) having a relatively high molecular weight.

6. The method according to claim 1, **characterized in that** a polybenzimidazole of formula (2) is prepared according to the following reaction scheme, wherein
- in step a), pyromellitic acid (PMA) is reacted with diaminobenzidine (DAB) to form the stoichiometric salt PMA·DAB which
- in step b), is polycondensed under hydrothermal conditions to form a non-cyclized or partially cyclized intermediate (3) and/or the polybenzimidazole of formula (2): 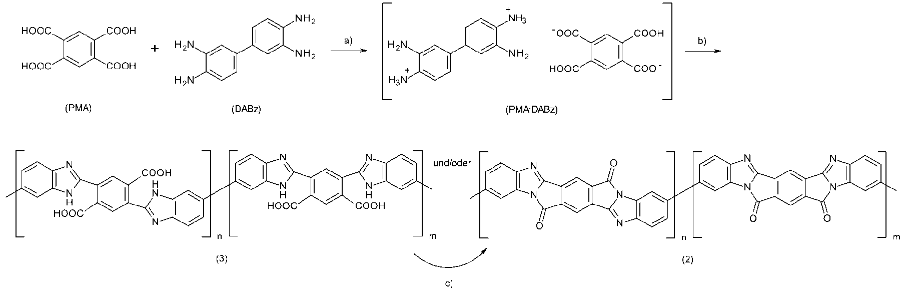 whereafter, optionally, step c) is carried out in order to convert the intermediate (3) completely into the polybenzimidazole of formula (2).

7. The method according to claim 6, **characterized in that** the polycondensation in step b) is carried out at a temperature of not more than 250°C and/or for a duration of not more than 1 h in order to substantially prepare only the intermediate (3), which, in the subsequent step c), is cyclized to form the polybenzimidazole (2).

8. The method according to claim 6, **characterized in that** the polycondensation in step b) is carried out at a temperature of not more than 275°C and/or for a duration of not more than 2 h in order to prepare a mixture of the polybenzimidazole (2) and the intermediate (3), which, in the subsequent step c), is fully cyclized to form the polybenzimidazole (2).

9. The method according to claim 6, **characterized in that** the polycondensation in step b) is carried out at a temperature of at least 350°C and/or for a duration of at least 2 h in order to substantially prepare only the polybenzimidazole (2).

10. The method according to any one of claims 6 to 8, **characterized in that** the solvent-free thermal treatment in step c) is carried out at a temperature of at least 200°C, preferably at least 300°C, more preferably about 400°C.

## Revendications

1. Procédé pour produire des polybenzimidazoles de la formule (1) ou (2) ci-dessus, dans laquelle n et m sont chacun ≥ 1: 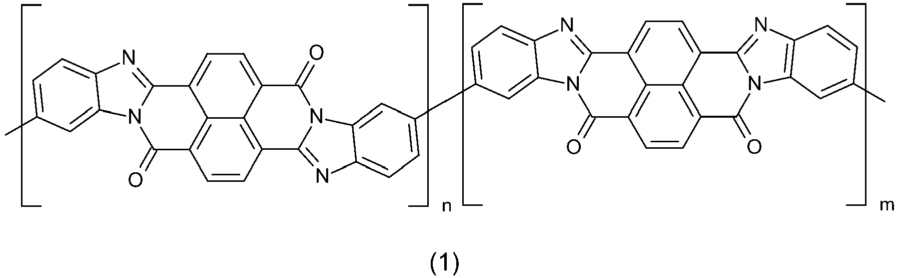 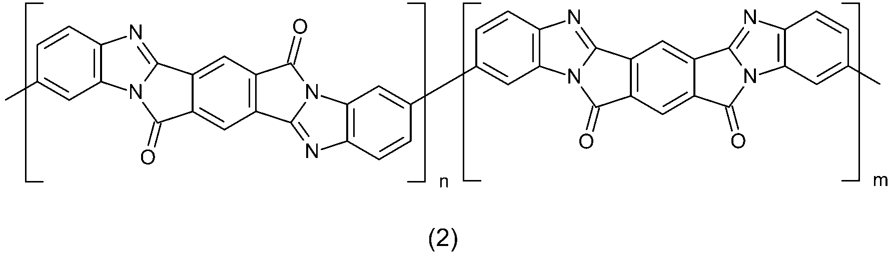
par polycondensation d'acides tétracarboxyliques ou de dianhydrides et tétraamines correspondants par chauffage conjoint des réactants,
**caractérisé en ce que**
la production des polybenzimidazoles de la formule (1) ou (2) est effectuée à partir des acides tétracarboxyliques et essentiellement sans formation de sous-produits:
a) d'abord en formant un sel stœchiométrique à partir de l'acide tétracarboxylique et de la tétraamine ;
b) en effectuant la polycondensation dans des conditions hydrothermiques par chauffage du sel stœchiométrique obtenu dans l'étape a) dans de l'eau comme solvant sous pression à des températures supérieures à 100 °C,
la valeur de n et m et par conséquent le poids moléculaire et/ou le degré de cyclisation dans le polycondensat ainsi obtenu étant réglés en fonction de la température et/ou la durée de la polycondensation ; et
c) éventuellement en effectuant un traitement thermique du polycondensat sans solvant pour obtenir une cyclisation complète.

2. Procédé selon la revendication 1, **caractérisé en ce qu'**un polybenzimidazole de la formule (1) est produit suivant le schéma réactionnel ci-dessus :
- dans l'étape a), en mettant en réaction d'acide naphthalènetétracarboxylique (NTCA) avec de la diaminobenzidine (DAB) pour obtenir du sel stœchiométrique NTCA·DAB, qui
- dans l'étape b), est polycondensé dans des conditions hydrothermiques pour obtenir le polybenzimidazole de la formule (1) :

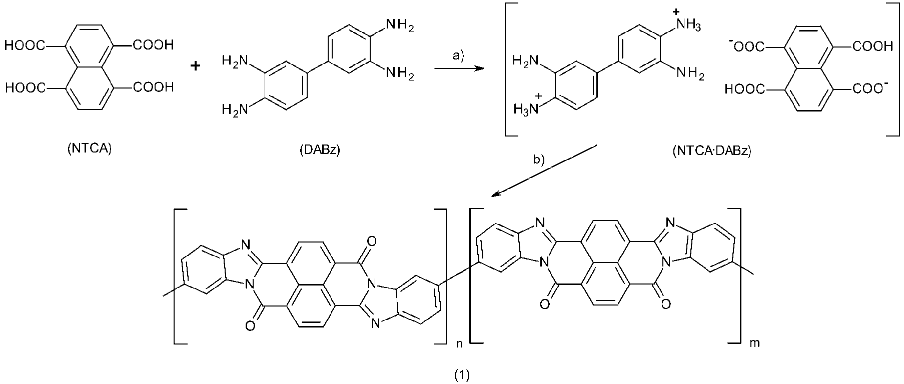

3. Procédé selon la revendication 2, **caractérisé en ce que** la polycondensation dans l'étape b) est effectuée à une température non supérieure à 250 °C et/ou pour une durée non supérieure à 1 h, pour produire un polybenzimidazole (1) ayant un poids moléculaire relativement faible.

4. Procédé selon la revendication 2, **caractérisé en ce que** la polycondensation dans l'étape b) est effectuée à une température non supérieure à 300 °C et/ou pour une durée non supérieure à 2 h, pour produire un polybenzimidazole (1) ayant un poids moléculaire moyen.

5. Procédé selon la revendication 2, **caractérisé en ce que** la polycondensation dans l'étape b) est effectuée à une température supérieure à 300 °C et/ou pour une durée d'au moins 2 h, pour produire un polybenzimidazole (1) ayant un poids moléculaire relativement élevé.

6. Procédé selon la revendication 1, **caractérisé en ce qu'**un polybenzimidazole de la formule (2) est produit suivant le schéma réactionnel ci-dessus :
- dans l'étape a), en mettant en réaction d'acide pyromellitique (PMA) avec de la diaminobenzidine (DAB) pour obtenir du sel stœchiométrique PMA·DAB, qui
- dans l'étape b), est polycondensé dans des conditions hydrothermiques pour obtenir un produit intermédiaire (3) non-cyclisé ou seulement partiellement cyclisé et/ou le polybenzimidazole de la formule (2) : 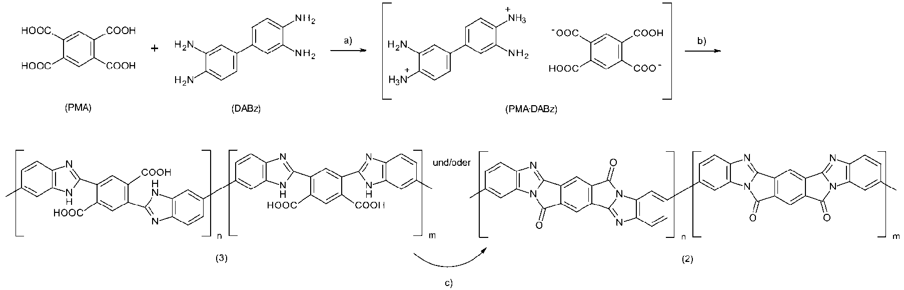 éventuellement suivi par la réalisation de l'étape c) pour entièrement convertir le produit intermédiaire (3) en polybenzimidazole de la formule (2).

7. Procédé selon la revendication 6, **caractérisé en ce que** la polycondensation dans l'étape b) est effectuée à une température non supérieure à 250 °C et/ou pour une durée non supérieure à 1 h, pour produire essentiellement uniquement le produit intermédiaire (3), qui, dans l'étape c) suivante, est cyclisé pour obtenir le polybenzimidazole (2).

8. Procédé selon la revendication 6, **caractérisé en ce que** la polycondensation dans l'étape b) est effectuée à une température non supérieure à 275 °C et/ou pour une durée non supérieure à 2 h, pour produire un mélange de polybenzimidazole (2) et du produit intermédiaire (3), qui, dans l'étape c) suivante, est entièrement cyclisé pour obtenir le polybenzimidazole (2).

9. Procédé selon la revendication 6, **caractérisé en ce que** la polycondensation dans l'étape b) est effectuée à une température d'au moins 350 °C et/ou pour une durée d'au moins 2 h, pour produire essentiellement uniquement le polybenzimidazole (2).

10. Procédé selon l'une quelconque parmi les revendications 6 à 8, **caractérisé en ce que** le traitement thermique sans solvant dans l'étape c) est effectué à une température d'au moins 200 °C, de préférence d'au moins 300 °C, de préférence encore d'environ 400 °C.
